Europäisches Patentamt

European Patent Office

Office européen des brevets

(19)

(11) Veröffentlichungsnummer: **0 165 536 B1**

(12) **EUROPÄISCHE PATENTSCHRIFT**

(45) Veröffentlichungstag der Patentschrift: **17.07.91**

(51) Int. Cl.5: **H01F  1/06**, G11B 5/706, B22F 9/18

(21) Anmeldenummer: **85107106.8**

(22) Anmeldetag: **10.06.85**

(54) **Im wesentlichen aus Eisen bestehende magnetische Pigmente, Verfahren zu ihrer Herstellung sowie deren Verwendung.**

(30) Priorität: **20.06.84 DE 3422916**

(43) Veröffentlichungstag der Anmeldung:
**27.12.85 Patentblatt  85/52**

(45) Bekanntmachung des Hinweises auf die Patenterteilung:
**17.07.91 Patentblatt  91/29**

(84) Benannte Vertragsstaaten:
**DE FR GB IT NL**

(56) Entgegenhaltungen:
**EP-A- 0 014 889**
**EP-A- 0 015 485**

**IEEE TRANSACTIONS ON MAGNETICS, Band MAG-20, Nr. 1, Januar 1984, Seiten 42-44, IEEE, New York, US; T. SUEYOSHI et al.: "Morphology of iron fine particles"**

(73) Patentinhaber: **BAYER AG**

**W-5090 Leverkusen 1 Bayerwerk(DE)**

(72) Erfinder: **Naumann, Rolf, Dr.**
**Scheiblerstrasse 89**
**W-4150 Krefeld 1(DE)**
Erfinder: **Leitner, Lutz, Dr.**
**Buschstrasse 151**
**W-4150 Krefeld 1(DE)**
Erfinder: **Rademachers, Jakob, Dr.**
**Hoeninghausstrasse 34**
**W-4150 Krefeld 12(DE)**
Erfinder: **Buxbaum, Gunter, Dr.**
**Holzapfelweg 2**
**W-4150 Krefeld(DE)**

## Beschreibung

Die vorliegende Erfindung betrifft im wesentlichen aus Eisen bestehende magnetische Pigmente einer röntgenographischen Kristallitgröße des 110-Reflexes zwischen 14 und 22 nm, Verfahren zu ihrer Herstellung sowie deren Verwendung zur Herstellung von magnetischen Informationsträgern.

Der Einsatz von magnetischen Eisenpigmenten für konventionelle Magnetaufzeichnungssysteme wird seit längerer Zeit untersucht, ohne daß bislang - trotz der im Vergleich zu oxidischen Pigmenten zu erreichenden höheren Aufzeichnungsdichte - größere Erfolge erzielt werden konnten.

Die für diese Anwendungszwecke geforderten Koerzitivkräfte der Metallpigmente im Bereich von 50 bis 80 KA/in im magnetischen Informationsträger werden bisher nach folgenden Methoden erreicht:
- durch Legieren des Eisenpigments mit bis zu etwa 30 Atom-% Nickel
- durch Nitridierung von hochkoerzitiven Eisenpigmenten zu niederkoerzitivem $Fe_4N$
- durch Herstellung von grobteiligem langnadligen Eisenpigment.

Alle der aufgezählten Methoden sind jedoch mit schwerwiegenden Nachteilen behaftet wie z. B. Toxizität des Nickels, schlechte Reproduzierbarkeit des $Fe_4N$, nicht akzeptables Bandrauschen durch die Grobteiligkeit des Eisenpigments.

Ein anderer Weg, Eisenpigmente mit den geforderten Eigenschaften darzustehen, besteht darin, daß man durch ein Verkürzen der Pigmentnadeln eine Absenkung der Koerzitivkraft erreicht, wobei die Pigmente gleichzeitig kleiner sind. Diese Methode führte aber bisher dazu, daß bei der Nadelverkürzung die für die Aufzeichnungseigenschaften wichtige Schaltfeldverteilung zu stark geschädigt wurde.

Aus IEEE Transactions on magnetics, MAG-20, (1984) Jan., No. 1, New York, USA sind Eisenteilchen mit 21 nm bekannt. Aus EP-A-15485, z.B. Seite 16, sind Eisenteilchen mit Koerzitivkräften von 62 KA/m bekannt. Ebenfalls sind aus EP-A-14889 Eisenpigmente mit Koerzitivkräften von von 43 bar 70 KA/m bekannt.

Die Aufgabe der vorliegenden Erfindung ist es daher, im wesentlichen aus Eisen bestehende magnetische Pigmente zur Verfügung zu stellen, die alle geforderten Charakteristika aufweisen, ohne daß sie die Nachteile der gemäß den beschriebenen Methoden hergestellten Pigmente aufweisen.

Diese Anforderungen werden erfüllt durch im wesentlichen aus Eisen bestehende magnetische Pigmente einer röntgenographischen Kristallitgröße des 110-Reflexes zwischen 14 und 22 nm, deren Koerzitivkraft im Bereich von 55 bis 88 kA/m liegt und die Schaltfeldverteilung der ausgerichteten Pigmente kleiner als 0,55 ist.

In einer besonderen Ausführungsform weisen die erfindungsgemäßen Pigmente 1 bis 6 Gew.-%, bevorzugt 1,5 bis 4 Gew.-% $SiO_2$, bezogen auf Eisen, auf. Eine besonders bevorzugte Ausführungsform der Pigmente ist dadurch gekennzeichnet, daß diese zusätzlich 0,5 bis 4,5 Gew.-% $Al_2O_3$, bezogen auf Eisen, aufweisen.

Diese Pigmente, die einerseits niederkoerzitiv, gleichzeitig feinteilig sind und eine außerordentlich gute Schaltverteilung aufweisen, sind erhältlich, wenn man bei ihrer Herstellung von Vorprodukten ausgeht, die nach dem Carbonatfällungsverfahren hergestellt werden.

Die erfindungsgemäßen Pigmente sind somit erhältlich durch Fällung eines Eisen(II)salzes mit einer überstöchiometrischen Menge einer wäßrigen Alkalicarbonatlösung und Oxidation zu $\alpha$-FeOOH gegebenenfalls Konvertierung zu $\gamma$-$Fe_2O_3$, $Fe_3O_4$ oder bertholoiden Eisenoxiden, anschließende Reduktion zum Metall, wobei spätestens während der Reduktion die Eisenoxide bzw. - oxidhydroxide einen anorganischen Sinterschutz aufweisen.

Die alkalische Sodafällung bei der Herstellung von Goethit ist bereits in der DE-A 21 62 716 beschrieben, doch erweisen sich die daraus hergestellten oxidischen Magnetpigmente denen nach anderen Verfahren hergestellten als nicht überlegen.

Bei ausreichender Ausstattung der auf diese Weise hergestellten Goethitpigmente mit Sinterschutz in Form von $SiO_2$ und gegebenenfalls $Al_2O_3$ sind jedoch überraschenderweise Vorläuferverbindungen zur Herstellung von magnetischen Metallpigmenten mit überragenden Eigenschaften erhältlich.

Gegenstand er vorliegenden Erfindung ist auch ein Verfahren zur Herstellung der erfindungsgemäßen Pigmente. Dieses ist dadurch gekennzeichnet, daß Eisen(II)salze mit einer überstöchiometrischen Menge einer wäßrigen Alkalicarbonatlösung gefällt und zu $\alpha$-FeOOH oxidiert, gegebenenfalls zu $Fe_2O_3$, $Fe_3O_4$ oder bertholoiden Eisenoxiden konvertiert und zum Metall reduziert werden, wobei die Eisenoxide bzw. - oxidhydroxide spätestens während der Reduktion durch eine Umhüllung mit silicumhaltigen Verbindungen versehen werden, wobei die siliziumhaltigen Verbindungen in einer solchen Menge zugesetzt werden, daß das reduzierte Pigment einen $SiO_2$- Gehalt von 1 bis 6 Gew%, bevorzugt 1,5 -4 Gew% aufweist.

Dabei ist es unerheblich, nach welchem Verfahren die silicumhaltigen Verbindungen auf die zu umhüllenden Eisenoxide gebracht werden. So kommen dafür die Lehren der GB-PS 11 22 637, der DE-OS 21 62 716, der DE-OS 22 02 853, Kombinationen davon oder andere denkbare Verfahren in Frage. Besonders wirksam ist der durch diese Umhüllung bedingte Sinterschutz dann, wenn die siliciumhaltigen Verbindungen in einer solchen Menge zugesetzt werden, daß das reduzierte Pigment einen $SiO_2$-Gehalt von 1 bis 6 Gew.-%, bevorzugt 1,5 bis 4 Gew.-%, aufweist.

Es ist ebenfalls nicht wichtig, in welcher Form die Eisenoxidpigmente zur Reduktion zu Metall eingesetzt werden, ob als $Fe_2O_3$, $FeO_x$ (1,33< x <1,5), $Fe_3O_4$ oder als FeOOH.

Es ist aber besonders vorteilhaft, wenn bei der Vorproduktherstellung während der Fällung des $\alpha$-FeOOH oder zum $\alpha$-FeOOH lösliche aluminiumhaltige Verbindungen in solchen Mengen zugesetzt werden, daß das reduzierte Pigment einen $Al_2O_3$-Gehalt von 0,5 bis 4,5 Gew.-% aufweist.

Gegenstand der vorliegenden Erfindung ist auch die Verwendung der erfindungsgemäßen Pigmente zur Herstellung von magnetischen Informationsträgern. Eine gleichbleibend gute Qualität dieser Informationsträger kann dadurch bewirkt werden, daß die Pigmente vor der Einarbeitung in die magnetischen Informationsträger mit einer Oxidhülle versehen werden.

In den nachfolgenden Beispielen, die nicht als einengend auf den Erfindungsgedanken anzusehen sind, wird das Verfahren beispielhaft geschildert und die damit erhaltenen Produkte werden charakterisiert (Tab. 1).

Beispiel 1

In einer Lösung aus 34,3 kg $Na_2CO_3$ in 208,5 kg Wasser werden bei einer Temperatur von 50°C 150 l einer 26,4 kg $FeSO_4$ enthaltenden Lösung unter kräftigen Rühren und Begasung mit 1,8 m³ Luft/h zur Reaktion gebracht. Nach 30 Minuten wird die Temperatur auf 70°C erhöht und die Begasung auf 3,6 m³ Luft/h verdoppelt. Nach 3,5 h ist die Goethit-Bildung abgeschlossen. Das Produkt wird abfiltriert und gewaschen, anschließend mit 300 l einer wäßrigen $Na_2SiO_3$-Lösung (4 Gew.-% $SiO_2$/ $\alpha$ FeOOH) bei 80°C nachbehandelt und die Suspension durch Zugabe von Schwefelsäure auf einen pH-Wert von 6 eingestellt. Das nachbehandelte $\alpha$-FeOOH wird gewaschen und getrocknet und bei einer Temperatur von 650°C zu $\alpha$-$Fe_2O_3$ geglüht, bei 400°C im Wasserstoffstrom zu $Fe_3O_4$ reduziert und im Luft/Stickstoff-Strom auf einen FeO-Gehalt von 28 % eingestellt. Das so stabilisierte Produkt wird bei 650°C nachgetempert. Die Reduktion dieses Produktes zum Metall erfolgt bei 425°C mit Wasserstoff (Probe A).

Beispiel 2

Der in Beispiel 1 mit $SiO_2$ nachbehandelte Goethit wird bei 750°C geglüht und wie in Beispiel 1 zum Metall reduziert (Probe B).

Beispiel 3

Es wird ein Goethit wie in Beispiel 1 hergestellt, gewaschen und bei 80°C mit 3 Gew.-% $SiO_2$ (in Form von Natriumwasserglas) und 0,5 Gew.-% $Al_2O_3$ (in Form von Aluminiumsulfat) nachbehandelt, nach Einstellung auf einen pH-Wert von 6 wird filtriert und gewaschen. Das Produkt wird wie in Beispiel 1 beschrieben über die Zwischenstufe $FeO_x$ (1,33<x<1,5) zum Metall umgewandelt (Probe C).

Beispiel 4

Goethitherstellung und Nachbehandlung erfolgen wie in Beispiel 1 beschrieben, die eingesetzte $FeSO_4$-Lösung wird jedoch mit 0,4 Gew.-% Aluminium in Form von Aluminiumsulfat aufgestärkt. Zwischenproduktherstellung und Metallreduktion werden wie in Beispiel 1 beschrieben durchgeführt (Probe D).

Beispiel 5

In einer Lösung aus 34,3 kg $Na_2CO_3$ in 208,5 kg Wasser werden bei einer Temperatur von 50°C 150 l einer 26,4 kg $FeSO_4$ und 388 g Aluminium in Form von Aluminiumsulfat enthaltenden wäßrigen Lösung unter Begasung mit 1,5 m³ Luft/h zur Reaktion gebracht. Nach einer halben Stunde wird die Temperatur auf 70°C erhöht, bei Erreichung eines Oxidationsgrades von 90 % wird 4 Gew.-% $SiO_2$ (in Form von Natriumwasserglas) zugesetzt und die Oxidation fortgeführt, nach 3,5 Stunden ist die Reaktion beendet. Es wird jedoch weitere 2 Stunden unter Luftbegasung nachgerührt. Das Produkt wird filtriert, gewaschen und getrocknet und dann zu $\alpha$-$Fe_2O_3$ verglüht und bei 425° zum Metall reduziert (Probe D).

Die gemäß der Beispiele 1-8 hergestellten Metallpigmente sind in der nachstehenden Tab. 1 charakterisiert.

Dabei geschah die Kristallitgrößenbestimmung [Λ] auf röntgenographischem Wege am 110-Reflex nach der Methode, wie sie in

Klug, H. P. und Alexander, L. E. (1974)

"X-Ray Diffraction Procedures"

Verlag Wiley, New York

beschrieben ist.

Die BET-Oberfläche wurde bestimmt dach der BET-Methode mit Stickstoffadsorption bei -195,8°C im Einpunktverfahren ohne vorheriges Ausheizen.

Koerzitivkraft des Magnetpulvers, Koerzitivkraft [IHc] und Ausrichtbarkeit [BR/B$_S$] im Magnetband wurden bei einem Meßfeld von 278,5 kA/m bestimmt. Die Schaltfeldverteilung [sfd] der Magnetbänder wird durch Differentiation der Hysteresekurve bei einer Feldänderung von 0,398 kA/m sec. aufgenommen. Die Auswertung erfolgt durch Bildung des Quotienten:

$$\text{sfd} = \frac{\underline{\text{Breite der Glockenkurve in halber Höhe}}}{\text{Feld im Kurvenmaximum}}$$

Beispiel 6

Eine Mischung von 180 l FeSO$_4$-Lösung enthaltend 26,4 kg FeSO$_4$ und 1796 ml Al$_2$(SO$_4$)$_3$-Lösung enthaltend 54 g/l Al wird mit 34,4 kg Na$_2$CO$_3$ in 172 l Lösung bei 45°C zur Reaktion gebracht, auf 50°C erwärmt und mit 1m$^3$/h Luft begast.

Das Reaktionsprodukt wird abfiltriert und gewaschen und anschließend mit 2,5 Gewichtsprozent SiO$_2$ als Natriumwasserglas nachbehandelt auf pH 5,6 angesäuert und gewaschen. Das getrocknete Produkt wurde bei 750°C geglüht und anschließend zum Metall reduziert (Probe F).

Beispiel 7

26,4 kg FeSO$_4$ und 34,4 kg Na$_2$CO$_3$ werden bei 45°C in 352 l Lösung zur Reaktion gebracht, auf 60°C erwärmt und mit 1,5 m$^3$/h Luft begast. Das gewaschene Reaktionsprodukt wird mit 2,5 % SiO$_2$ (als Wasserglas) und 0,5 % Al$_2$O$_3$ (als Aluminiumsulfat) nachbehandelt, gewaschen und getrocknet, bei 750°C geglüht und bei 425°C zum Metall reduziert (Probe G).

Beispiel 8

Die gleiche Mischung wie in Beispiel 6 wird bei 50°C zur Reaktion gebracht, mit 1,5 m$^3$/h Luft begast und nach 60 Minuten unter Fortführung der Begasung auf 70°C erwärmt. Bei einem Oxidationsgrad von 90 % des eingesetzten Fe$^{II}$ werden 4 % SiO$_2$ (bezogen auf Fe) als Natriumwasserglaslösung zugesetzt und die Oxidation für weitere 3 Stunden fortgeführt. Das gewaschene und getrocknete Material wird auf 750°C erwärmt und anschließend zum Metall reduziert (Probe H).

Das so erhaltene Metallpulver wird vorsichtig mit Stickstoff/Luft-Gemischen anoxidiert und ein handhabungsstabiles Produkt erhalten (Probe H 1).

Tabelle 1

Charakterisierung der erfindungsgemäßen Metallpigmente

| Probe | $\overline{/nm/}$ | BET-Oberfläche $/m^2/g/$ | Koerzitivkraft des Pulvers $/kA/m/$ | Laborbandabprüfung | | |
|---|---|---|---|---|---|---|
| | | | | $_IH_C$ $/kA/m/$ | $B_R/B_S$ | sfd |
| A | 16,5 | 45 | 61,7 | 80,0 | 0,74 | 0,50 |
| B | 16,0 | 47 | 61,0 | 82,0 | 0,74 | 0,49 |
| C | 17,0 | 55 | 61,0 | 79,8 | 0,74 | 0,48 |
| D | 15,0 | 51 | 65,7 | 85,9 | 0,76 | 0,53 |
| E | 16,5 | 50 | 66,4 | 81,1 | 0,80 | 0,41 |
| F | 18,5 | 52 | 60,2 | 69,4 | 0,77 | 0,43 |
| G | 20,0 | 48 | 79,7 | 80,4 | 0,81 | 0,40 |
| H | 16,5 | 42 | 68,7 | - | - | - |
| H1 | - | - | - | 75,6 | 0,80 | 0,39 |

**Patentansprüche**

1. Im wesentlichen aus Eisen besthende magnetische Pigmente einer röntgenographischen Kristallitgröße des 110-Reflexes zwischen 14 und 22 nm, einer Koerzitivkraft im Bereich von 55 bis 88 kA/m und einer Schaltfeldverteilung der ausgerichteten Pigmente Kleiner als 0,55

2. Pigmente gemäß Anspruch 1, dadurch gekennzeichnet, daß sie 1 bis 6 Gew.-%, bevorzugt 1,5 bis 4 Gew.-% $SiO_2$, bezogen auf Eisen, aufweisen.

EP 0 165 536 B1

3. Pigmente gemäß einem der Ansprüche 1 oder 2, dadurch gekennzeichnet, daß sie zusätzlich 0,5 bis 4,5 Gew.-% Al₂O₃, bezogen auf Eisen, aufweisen.

4. Verfahren zur Herstellung der Pigmente gemäß einem oder mehreren der Ansprüche 1 bis 3, dadurch gekennzeichnet, daß Eisen(II)salze mit einer überstöchiometrischen Menge einer wäßrigen Alkalicarbonatlösung gefällt und zu α-FeOOH oxidiert, gegebenenfalls zu Fe₂O₃, Fe₃O₄ oder bertholoiden Eisenoxiden konvertiert und zum Metall reduziert werden, wobei die Eisenoxide bzw. -oxidhydroxide spätestens während der Reduktion durch eine Umhüllung mit siliciumhaltigen Verbindungen versehen werden, wobei die siliciumhaltigen Verbindungen in einer solchen Menge zugesetzt werden, daß das reduzierte Pigment einen SiO₂-Gehalt von 1 bis 6 Gew.-%, bevorzugt 1,5 bis 4 Gew.-%, aufweist.

5. Verfahren gemäß Anspruch 4, dadurch gekennzeichnet, daß während der Fällung des α-FeOOH oder zum α-FeOOH lösliche aluminiumhaltige Verbindungen in solchen Mengen zugesetzt werden, daß das reduzierte Pigment einen Al₂O₃-Gehalt von 0,5 bis 4,5 Gew.-% aufweist.

6. Verwendung der im wesentlichen aus Eisen bestehenden magnetischen Pigmente gemäß einem oder mehreren der Ansprüche 1 bis 5 zur Herstellung von magnetischen Informationsträgern.

7. Verwendung gemäß Anspruch 6, dadurch gekennzeichnet, daß die Pigmente vor der Einarbeitung in die magnetischen Informationsträger mit einer Oxidhülle versehen werden.

**Claims**

1. Magnetic pigments consisting essentially of iron and having a radiographic crystallite size of the 110 reflex of 14 to 22 nm, a coercive force of 55 to 88 kA/m and a switch field distribution of the aligned pigments of less than 0.55.

2. Pigments as claimed in claim 1, characterized in that they contain 1 to 6% by weight and preferably 1.5 to 4% by weight SiO₂, based on iron.

3. Pigments as claimed in claim 1 or 2, characterized in that they additionally contain 0.5 to 4.5% by weight Al₂O₃, based on iron.

4. A process for the production of the pigments claimed in one or more of claims 1 to 3, characterized in that iron(II) salts are precipitated with an overstoichiometric quantity of an aqueous alkali carbonate solution and oxidized to α-FeOOH, optionally converted to Fe₂O₃, Fe₃O₄ or bertholoid iron oxides and reduced to the metal, the iron oxides or oxide hydroxides being provided with a coating of silicon-containing compounds at the latest during the reduction step, the silicon-containing compounds being added in such a quantity that the reduced pigment has an SiO₂ content of 1 to 6% by weight and preferably 1.5 to 4% by weight.

5. A process as claimed in claim 4, characterized in that, during precipitation of the α-FeOOH or to the α-FeOOH, soluble aluminium-containing compounds are added in such quantities that the reduced pigment has an Al₂O₃ content of 0.5 to 4.5% by weight.

6. The use of the magnetic pigments consisting essentially of iron claimed in one or more of claims 1 to 5 for the production of magnetic information supports.

7. The use claimed in claim 6, characterized in that the pigments are provided with an oxide coating before incorporation in the magnetic information supports.

**Revendications**

1. Pigments magnétiques, consistant essentiellement en du fer et dont la grosseur des cristallites (déterminée par un diagramme de réflexion des rayons X sur le plan 110) se situe entre 14 et 22 nm, ces pigments ayant une force coercitive comprise entre 55 et 88 kA/m et ayant une répartition du champ de liaison ou de commutation des pigments orientés qui est inférieure à 0,55.

6

2. Pigments selon la revendication 1, caractérisés en ce qu'ils présentent 1 à 6% en poids, de préférence 1,5 à 4% en poids, de SiO$_2$, par rapport au fer.

3. Pigments selon l'une des revendications 1 ou 2, caractérisés en ce qu'ils présentent en outre 0,5 à 4,5% en poids de Al$_2$O$_3$, par rapport au fer.

4. Procédé pour préparer les pigments selon une ou plusieurs des revendications 1 à 3, caractérisé en ce qu'on précipite des sels de fer-(II) à l'aide d'une quantité, supérieure à la stoechiométrie, d'une solution aqueuse d'un carbonate alcalin et l'on oxyde pour obtenir FeOOH-α, on convertit éventuellement en Fe$_2$O$_3$, Fe$_3$O$_4$ ou en des oxydes de fer bertholoïdes et l'on réduit en métal les oxydes de fer ou les oxydes/hydroxydes de fer étant, au plus tard pendant la réduction, munis d'une enveloppe obtenue à l'aide de composés contenant du silicium, les composés contenant du silicium étant ajoutés en une quantité telle que le pigment réduit présente une teneur en SiO$_2$ de 1 à 6% en poids, de préférence 1,5 à 4% en poids.

5. Procédé selon la revendication 4, caractérisé en ce que, pendant la précipitation du FeOOH-α ou au FeOOH-α, on ajoute des composés solubles contenant de l'aluminium, introduits en une quantité telle que le pigment réduit présente une teneur en Al$_2$O$_3$ de 0,5 à 4,5% en poids.

6. Utilisation des pigments magnétiques, consistant essentiellement en du fer, selon une ou plusieurs des revendications 1 à 5, pour la production de supports magnétiques d'informations.

7. Utilisation selon la revendication 6, caractérisée en ce que, avant leur incorporation dans le support magnétique d'informations, les pigments ont été munis d'une enveloppe d'oxyde(s).